# EUROPEAN PATENT APPLICATION

(11) **EP 4 807 227 A1**
(43) Date of publication of application: **16.09.2026**
(21) Application number: 26163899.3
(22) Date of filing: 11.03.2026
(51) Int. Cl.: F16K 31/06, F16K 41/10

(54) **VALVE APPARATUS**

(30) Priority: 12.03.2025 US 202519077371
(71) Applicant: MAC Valves Inc., Wixom Michigan 48393 (US)
(72) Inventor: Landacre, Brett, Bloomfield Hills, 48304 (US)
(74) Representative: Murgitroyd & Company

(57) **Abstract**

A valve including a movable poppet positioned within a valve cartridge and having valve member that is configured to contact a valve seat. A first diaphragm is provided between a first portion of the movable poppet and a first retainer ring, and a second diaphragm provided between a second portion of the movable poppet and a second retainer ring, wherein a fluid flow path that connects an inlet port and an outlet port of the valve cartridge is provided between the first diaphragm and the second diaphragm, and wherein bearing surfaces of the movable poppet that orient the movable poppet relative to the valve cartridge are positioned outside of the fluid flow path such that the bearing surfaces are not exposed to a fluid in the fluid flow path.

## Description

### FIELD

The present disclosure relates to a valve apparatus.

### BACKGROUND

This section provides background information related to the present disclosure which is not necessarily prior art.

Solenoid operated valves are frequently used in a variety of different applications, such as in sorters, packaging machines, food processors, and the like. These valves are used to control the flow of a fluid and may be operated for millions of cycles.

The fluid that flows through the valve may sometimes include contaminants. While these contaminants may be microscopic in nature and have particle sizes of only a few microns, the use of the valve over millions of cycles can lead to contaminate build-up within the regions of the valve that are exposed to the fluid. If a bearing surface is present within a region of the valve that is exposed to the fluid, the bearing surface may be subjected to contaminate build-up, which can undesirably degrade the bearing surface over time and potentially reduce the number of cycles that the valve operates normally.

### SUMMARY

This section provides a general summary of the disclosure, and is not a comprehensive disclosure of its full scope or all of its features.

According to a first aspect of the present disclosure, there is provided a valve apparatus that may include a valve assembly; and an actuation assembly attached to the valve assembly and configured to open and close the valve assembly. The valve assembly can include a valve cartridge including an inlet port, an outlet port, and a valve seat positioned between the inlet port and the outlet port; a movable poppet positioned within the valve cartridge and having valve member that is configured to contact the valve seat when the valve assembly is closed and be spaced apart from the valve seat when the valve assembly is open; a first diaphragm provided between a first portion of the movable poppet and a first retainer ring; and a second diaphragm provided between a second portion of the movable poppet and a second retainer ring, wherein a fluid flow path that connects the inlet port and the outlet port is provided between the first diaphragm and the second diaphragm, and wherein bearing surfaces of the movable poppet that orient the movable poppet relative to the valve cartridge are positioned outside of the fluid flow path such that the bearing surfaces are not exposed to a fluid in the fluid flow path.

According to the first aspect, the actuation assembly includes a solenoid coil, an armature connected to the movable poppet, and a pole piece.

According to the first aspect, the armature and the movable poppet collectively define the first portion of the movable poppet.

According to the first aspect, one of the bearing surfaces of the movable poppet that is positioned outside of the flow path is between the armature and the solenoid coil.

According to the first aspect, a fastener is connected to the movable poppet, the fastener and the movable poppet collectively define the second portion of the movable poppet, and another of the bearing surfaces of the movable poppet that is positioned outside of the flow path is between the fastener and the second retainer ring.

According to the first aspect, the first and second retainer rings are each positioned outside of the flow path.

According to the first aspect, each of the first and second diaphragms are elastomeric members including a central portion defining an aperture, a radially outermost portion, and an annular ridge between the central portion and the radially outermost portion that permit the first and second diaphragms to flex.

According to the first aspect, the radially outermost portion of the first and second diaphragms are sandwiched between a respective annular shoulder of the valve cartridge and the first and second retainer rings, respectively.

According to the first aspect, the valve apparatus can also include a manifold having a cavity, an inlet bore in communication with the cavity, and an outlet bore in communication with the cavity, and wherein the valve cartridge is provided in the cavity such that the inlet bore is in communication with the inlet port and the outlet bore is in communication with the outlet port.

According to a second aspect of the present disclosure, there is provided a valve apparatus that may include a manifold having a cavity, a threaded inlet bore in communication with the cavity, and a threaded outlet bore in communication with the cavity; a valve cartridge provided in the cavity, the valve cartridge including an inlet port in communication with the threaded inlet bore, an outlet port in communication with the threaded outlet bore, and a valve seat positioned between the inlet port and the outlet port; a solenoid assembly including a housing attached to each of the manifold and the valve cartridge, the solenoid assembly including a bobbin having a coil attached thereto positioned in the housing, an armature positioned in the bobbin, and a polepiece positioned in the bobbin and fixed to the housing; a movable poppet positioned within the valve cartridge and having valve member that is configured to contact the valve seat when the valve assembly is closed and be spaced apart from the valve seat when the valve assembly is open, the movable poppet being attached to and movable with the armature; a first annular diaphragm provided in the valve cartridge and including a first central portion sandwiched between the movable poppet and the armature and a first radially outermost portion sandwiched between a first retainer ring coupled to the valve cartridge and a first annular shoulder of the valve cartridge; and a second annular diaphragm provided in the valve cartridge and including a second central portion sandwiched between the movable poppet and a fastener that is attached to the movable poppet and a second radially outermost position sandwiched between a between a second retainer ring coupled to the valve cartridge and a second annular shoulder of the valve cartridge; wherein a fluid flow path that connects the inlet port and the outlet port is provided between the first diaphragm and the second diaphragm, and wherein bearing surfaces of the movable poppet that orient the movable poppet relative to the valve cartridge are positioned outside of the fluid flow path such that the bearing surfaces are not exposed to a fluid in the fluid flow path.

According to the second aspect, the armature and the movable poppet collectively define a first portion of the movable poppet, the fastener and the movable poppet collectively define a second portion of the movable poppet, and the bearing surfaces that are positioned outside of the fluid flow path include a first bearing surface between the first portion and the bobbin and second bearing surface between the second portion and the second retainer ring.

According to the second aspect, the first and second retainer rings are each positioned outside of the flow path.

According to the second aspect, the valve apparatus may also include a biasing member between the armature and the bobbin that biases the armature and the valve member of the movable poppet into engagement with the valve seat.

According to the second aspect, the movable poppet includes a hollow cylindrical body having a first end attached to the armature and an opposite second end attached to the fastener, and wherein the valve member extends radially outward from the hollow cylindrical body and portions of the hollow cylindrical body on opposing sides of the valve member are entirely spaced apart from an interior surface of the valve cartridge.

According to the second aspect, the fastener includes a shank threadingly engaged with the second end of the hollow cylindrical body, and a head attached to the shank, and wherein an interface between the head and the second retainer ring defines one of the bearing surfaces of the movable poppet.

According to the second aspect, wherein the valve member includes an elastomeric coating on a surface that contacts the valve seat.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
FIG. 1 is an isometric perspective view of a valve assembly according to a principle of the present disclosure;
FIG. 2 is an exploded perspective view of the valve assembly illustrated in FIG. 1;
FIG. 3 is a cross-sectional view of the valve assembly illustrated in FIG. 1.

Corresponding reference numerals indicate corresponding parts throughout the several views of the drawings.

### DETAILED DESCRIPTION

Example embodiments will now be described more fully with reference to the accompanying drawings. The example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

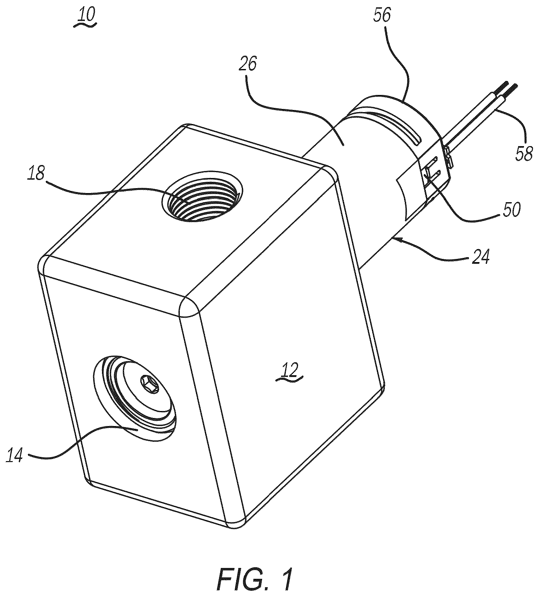

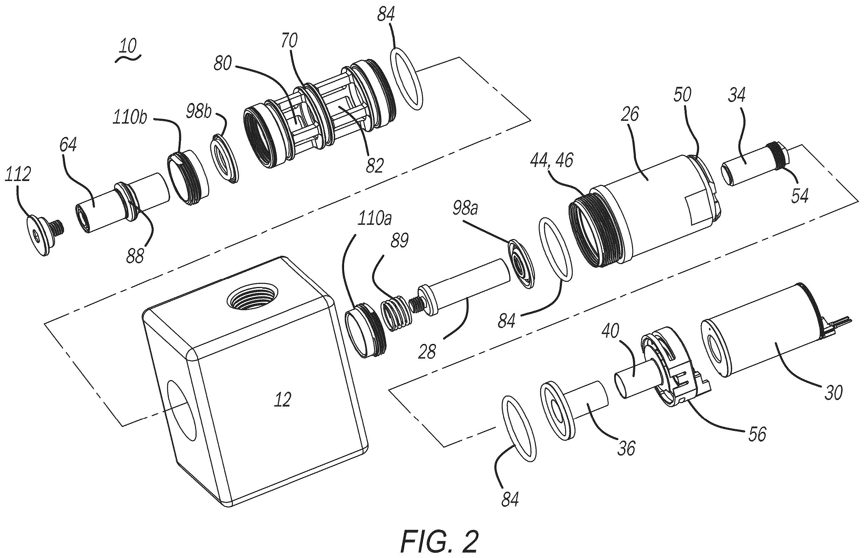

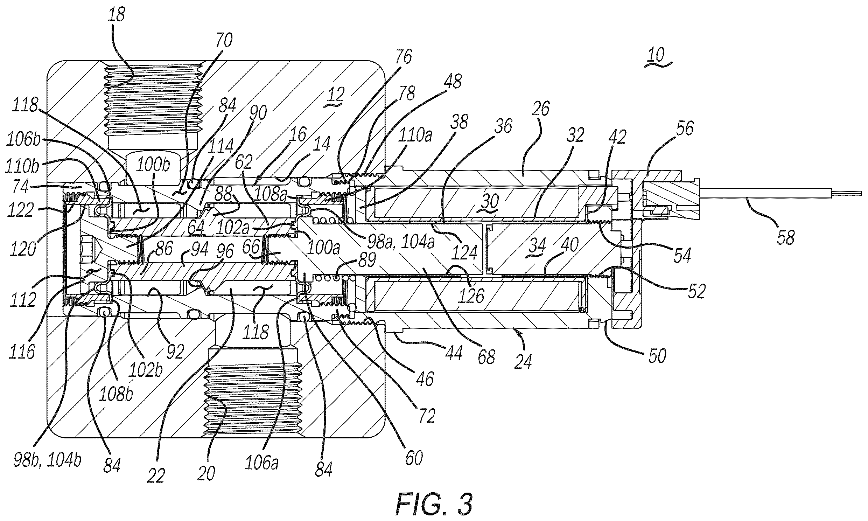

FIGS. 1-3 illustrate an example valve apparatus 10 according to a principle of the present disclosure. Valve apparatus 10 is configured to control the flow of fluid, including liquids and gases. Valve apparatus 10 includes a manifold or ported cavity block 12 having a cavity 14 formed therein that is configured for receipt of a valve cartridge 16 (FIGS. 2 and 3). Manifold 12 is generally a cubic or rectangular structure having a threaded inlet bore 18 and a threaded outlet bore 20 (FIG. 3) that are each in communication with cavity 14 such that a fluid that enters threaded inlet bore 18 can enter valve cartridge 16 when a valve assembly 22 (FIG. 3) of valve cartridge 16 is in an open position, flow through the valve cartridge 16, and exit the valve cartridge 16 through the threaded outlet bore 20. While threaded bore 18 is described as an "inlet" and threaded bore 20 is described as an "outlet," it should be understood that threaded bore 18 may function as an "outlet" and threaded bore 20 may function as an inlet without departing from the scope of the present disclosure.

Valve assembly 22 may be opened and closed by an actuation assembly 24. In the illustrated embodiment, actuation assembly 24 is a solenoid actuator. Although a solenoid actuator is shown and described, it should be understood that other actuators known to one skilled in the art (e.g., stepper motors) may be used in place of the solenoid actuator without departing from the scope of the present disclosure. In the illustrated embodiment (see, e.g., FIGS. 2 and 3), actuation assembly 24 includes a housing 26, an armature 28, a solenoid coil 30 that is mounted to a hollow cylindrical support structure or bobbin 32, and a pole piece 34. A first cylindrical sleeve 36 including a first radially outwardly extending flange 38 may be positioned between bobbin 32 and armature 28, and a second cylindrical sleeve 40 having a second radially outwardly extending flange 42 may be positioned between bobbin 32 and pole piece 34.

Housing 26 is a hollow cylindrical member including a first end 44 having a threaded surface 46 (FIG. 2) that is configured to threadingly engage with a correspondingly threaded surface 48 formed in cavity 14. Housing 26 also includes a second end 50 having a threaded surface 52 configured to threadingly engage with a threaded surface 54 formed on pole piece 34, which fixes pole piece 34 to housing 26. A cover piece 56 designed as a plug and including electrical connections 58 that are configured to supply a current or voltage to solenoid coil 30 may be attached to second end 50 of housing 26.

Armature 28 is a solid member formed of a material that can be magnetically attracted, and includes a mating end 60 that is configured to mate with a first internally threaded end 62 of a poppet 64 of valve assembly 22. Mating end 60 includes a threaded projection 66 connected to a main body 68 of armature 28. Internally threaded end 62 of poppet 64 is configured for receipt of the threaded projection 66. Armature 28 is movable such that when a voltage or current is applied to solenoid coil 30 of actuator assembly 24, armature 28 can move poppet 64 between the open and closed positions.

Valve assembly 22 is seated within cavity 14 of manifold 12. Valve assembly 22 includes a valve retainer 70 including a proximal end 72 coupled to first end 44 of housing 26 of actuator assembly 24, and a distal end 74 located within cavity 14. Proximal end 72 includes an exterior threading 76 that is configured to mate with an interior threaded surface 78 formed on first end 44 of housing 26. As best shown in FIG. 2, valve retainer 70 includes a first plurality of ports 80 and a second plurality of ports 82. When valve cartridge 16 is seated within cavity 14, the first plurality of ports 80 are positioned in alignment with threaded inlet bore 18 of manifold 12 and the second plurality of ports 82 are positioned in alignment with threaded outlet bore 20 of manifold 20. A plurality of seal members 84 can be provided between valve retainer 70 and cavity 14.

Valve retainer 70 houses poppet 64 which, as noted above, is coupled to armature 28. Poppet 64 includes first internally threaded end 62 and an opposite second internally threaded end 86. A valve member 88 is positioned between first internally threaded end 62 and second internally threaded end 86. Movement of poppet 64 by actuation of armature 28 moves valve member 88 between the open and closed positions. FIG. 3 illustrates valve member 88 in the closed position. Poppet 64 having valve member 88 unitary therewith is biased to the closed position by a biasing member or coil spring 89 that is positioned between armature 28 and first radially outwardly extending flange 38 of first cylindrical sleeve 36.

When armature 28 is attracted by pole piece 34 through application of a voltage or current to coil 30 of solenoid, valve member 88 will move along with armature 28 in a direction toward pole piece 34 to space valve member 88 away from a valve seat 90 provided on an interior surface 92 of valve retainer 70 to open the valve assembly 22. Poppet 64 may have a hollow cylindrical body 94, with valve member 88 extending radially outward therefrom. While valve member 88 is illustrated as including an elastomeric coating 96 on a side that faces valve seat 90, it should be understood that valve member 88 does not necessarily require such elastomeric coating 96 or that elastomeric coating 96 can be provided over an entirety of valve member 88.

Valve assembly 22 includes a pair of elastomeric diaphragms 98a and 98b that are configured to seal valve assembly 22. In this regard, diaphragm 98a is located between armature 28 and first internally threaded end 62 of poppet 64, and includes a centrally positioned aperture 100a that is configured to for receipt of threaded projection 66 such that when armature 28 is threadingly engaged with first internally threaded end 62 of poppet 64, a central portion 102a of diaphragm 98a is sandwiched between poppet 64 and armature 28. Diaphragm 98a also includes an annular ridge 104a positioned radially outward from centrally positioned aperture 100a that permits diaphragm 98a to flex during use of valve assembly 22, which assists in attenuating pressure fluctuations experienced by valve assembly 22 during use thereof. A radially outermost portion 106a of diaphragm 98a is sandwiched between a first radially inwardly extending shoulder 108a of valve retainer 70, and a first retainer ring 110a that is threadingly engaged with valve retainer 70.

Diaphragm 98b is similar to diaphragm 98a, and is located between a fastener 112 and second internally threaded end 86 of poppet 64. Fastener 112 includes a threaded shank 114 configured to mate with second internally threaded end 86 of poppet 64, and a head 116 that extends radially outward from threaded shank 114. Because fastener 112 is threadingly engaged with hollow cylindrical body 94, the combination of the fastener 112 and the hollow cylindrical body 94 can collectively define a portion of the poppet 64. A centrally positioned aperture 100b of second diaphragm 98b is configured for receipt of threaded shank 114 such that when fastener 112 is threadingly engaged with second internally threaded end 86 of poppet 64, a central portion 102b of diaphragm 98b is sandwiched between poppet 64 and fastener 112. Diaphragm 98b also includes an annular ridge 104b positioned radially outward from centrally positioned aperture 100b that permits diaphragm 98b to flex during use of valve assembly 22, which assists in attenuating pressure fluctuations experienced by valve assembly 22 during use thereof. A radially outermost portion 106b of diaphragm 98b is sandwiched between a second radially inwardly extending shoulder 108b of valve retainer 70, and a second retainer ring 110b that is threadingly engaged with valve retainer 70 and is similar to first retainer ring 110a.

As noted above, poppet 64 includes hollow cylindrical body 94 with valve member 88 extending radially outward therefrom. Valve member 88, therefore, is the only part of poppet 64 that contacts valve retainer 70 (i.e., contact between valve member 88 and valve seat 90 in the closed position of the valve assembly 22). Put another way, the hollow cylindrical body 94 of poppet 64 does not include any portion thereof that slides along or bears against interior surface 92 of valve retainer 70.

This is significant because, as also noted above, the fluid that passes through valve assembly 22 may include contaminants. While the contaminants may be microscopic particles having particle sizes of only a few microns or less, if these contaminants were to infiltrate an interface between a bearing surface of poppet 64 and a bearing surface of valve retainer 70, the possibility arises that the contaminants can collect and aggregate to an extent that the contaminants may cause the bearing surfaces to wear, which may reduce the useful life of valve assembly 22. In addition, contaminants that collect and aggregate within valve assembly 22 may potentially foul the fluid passing through valve assembly 22. Thus, avoiding contamination build-up in valve assembly 22 is an important aspect of the present disclosure because it creates a more hygienic valve assembly that can be used in specialized fluid flow applications (e.g., medical gases).

Again referring to FIG. 3, it can be seen that the fluid flow path 118 between diaphragms 98a and 98b is positioned inboard from a first bearing surface 120 of fastener 112 that slides relative to a second bearing surface 122 of second retainer ring 110b. Put another way, the interface between the first bearing surface 120 and the second bearing surface 122 is positioned outside the fluid flow path 118 defined between diaphragms 98a and 98b such that the interface is not exposed to fluid flowing through valve assembly 22. Because the interface is not exposed to fluid flowing through the valve assembly 22, no contaminants are able to collect and aggregate within the fluid flow path 118 that may cause wear on the components of the valve assembly 22 or create un-hygienic conditions.

In addition, notwithstanding the lack of bearing surfaces within the flow path 118 that can assist in properly orienting poppet 64 and valve member 88 relative to valve cartridge 70 and valve seat 90, the poppet 64 and valve member 88 can still be properly oriented relative to valve cartridge 70 and valve seat 90 by the first and second bearing surfaces 120 and 122 of the fastener 112 and second retainer ring 110b, and by a third bearing surface 124 of armature 28 and a fourth bearing surface 126 of first cylindrical sleeve 36. Similar to the combination of fastener 112 and hollow cylindrical body 94 collectively defining a portion of the poppet 64, the combination of hollow cylindrical body 94 and armature 28 can also collectively define another portion of the poppet 64 due to the threaded connection between hollow cylindrical body 94 and armature 28. Notably, the third and fourth bearing surfaces 124 and 126 are also positioned outside of the fluid flow path 118 such that these surfaces are also not exposed to the fluid flowing through valve assembly 22. Accordingly, the poppet 64 does not include any bearing surfaces within the fluid flow path 118, and no bearing surfaces of the poppet 64 are exposed to the fluid flowing through the fluid flow path 118 of valve assembly 22 such that no aggregation of contaminants can occur in the fluid flow path 118.

Thus, in summary, the valve apparatus 10 utilizes a valve assembly 22 that reduces the number of surfaces that are exposed to the fluid flowing through the valve assembly 22, which can reduce the opportunity for contaminants to collect and aggregate within valve assembly 22 and, in turn, increase the hygienic nature of the valve assembly 22. In addition, notwithstanding the lack of bearing surfaces within the fluid flow path 118, the valve assembly 22 is still able to maintain a balanced pressure due to the use of diaphragms 98a and 98b that define the fluid flow path 118 therebetween, which also enables the valve assembly 22 to be exposed to greater pressures if desired.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A valve apparatus, comprising:
a valve assembly; and
an actuation assembly attached to the valve assembly and configured to open and close the valve assembly,
wherein the valve assembly includes:
a valve cartridge including an inlet port, an outlet port, and a valve seat positioned between the inlet port and the outlet port;
a movable poppet positioned within the valve cartridge and having valve member that is configured to contact the valve seat when the valve assembly is closed and be spaced apart from the valve seat when the valve assembly is open;
a first diaphragm provided between a first portion of the movable poppet and a first retainer ring; and
a second diaphragm provided between a second portion of the movable poppet and a second retainer ring,
wherein a fluid flow path that connects the inlet port and the outlet port is provided between the first diaphragm and the second diaphragm, and
wherein bearing surfaces of the movable poppet that orient the movable poppet relative to the valve cartridge are positioned outside of the fluid flow path such that the bearing surfaces are not exposed to a fluid in the fluid flow path.

2. The valve apparatus according to claim 1, wherein the actuation assembly includes a solenoid coil, an armature connected to the movable poppet, and a pole piece.

3. The valve apparatus according to claim 2, wherein the armature and the movable poppet collectively define the first portion of the movable poppet.

4. The valve apparatus according to claim 3, wherein one of the bearing surfaces of the movable poppet that is positioned outside of the flow path is between the armature and the solenoid coil.

5. The valve apparatus according to claim 4, wherein a fastener is connected to the movable poppet, the fastener and the movable poppet collectively define the second portion of the movable poppet, and another of the bearing surfaces of the movable poppet that is positioned outside of the flow path is between the fastener and the second retainer ring.

6. The valve apparatus according to claim 1, wherein the first and second retainer rings are each positioned outside of the flow path.

7. The valve apparatus according to claim 1, wherein each of the first and second diaphragms are elastomeric members including a central portion defining an aperture, a radially outermost portion, and an annular ridge between the central portion and the radially outermost portion that permit the first and second diaphragms to flex.

8. The valve apparatus according to claim 7, wherein the radially outermost portion of the first and second diaphragms are sandwiched between a respective annular shoulder of the valve cartridge and the first and second retainer rings, respectively.

9. The valve apparatus according to claim 1, further comprising a manifold having a cavity, an inlet bore in communication with the cavity, and an outlet bore in communication with the cavity, and wherein the valve cartridge is provided in the cavity such that the inlet bore is in communication with the inlet port and the outlet bore is in communication with the outlet port.

10. A valve apparatus comprising:
a manifold having a cavity, a threaded inlet bore in communication with the cavity, and a threaded outlet bore in communication with the cavity;
a valve cartridge provided in the cavity, the valve cartridge including an inlet port in communication with the threaded inlet bore, an outlet port in communication with the threaded outlet bore, and a valve seat positioned between the inlet port and the outlet port;
a solenoid assembly including a housing attached to each of the manifold and the valve cartridge, the solenoid assembly including a bobbin having a coil attached thereto positioned in the housing, an armature positioned in the bobbin, and a polepiece positioned in the bobbin and fixed to the housing;
a movable poppet positioned within the valve cartridge and having valve member that is configured to contact the valve seat when the valve assembly is closed and be spaced apart from the valve seat when the valve assembly is open, the movable poppet being attached to and movable with the armature;
a first annular diaphragm provided in the valve cartridge and including a first central portion sandwiched between the movable poppet and the armature and a first radially outermost portion sandwiched between a first retainer ring coupled to the valve cartridge and a first annular shoulder of the valve cartridge; and
a second annular diaphragm provided in the valve cartridge and including a second central portion sandwiched between the movable poppet and a fastener that is attached to the movable poppet and a second radially outermost position sandwiched between a between a second retainer ring coupled to the valve cartridge and a second annular shoulder of the valve cartridge;
wherein a fluid flow path that connects the inlet port and the outlet port is provided between the first diaphragm and the second diaphragm, and
wherein bearing surfaces of the movable poppet that orient the movable poppet relative to the valve cartridge are positioned outside of the fluid flow path such that the bearing surfaces are not exposed to a fluid in the fluid flow path.

11. The valve apparatus according to claim 10, wherein the armature and the movable poppet collectively define a first portion of the movable poppet, the fastener and the movable poppet collectively define a second portion of the movable poppet, and the bearing surfaces that are positioned outside of the fluid flow path include a first bearing surface between the first portion and the bobbin and second bearing surface between the second portion and the second retainer ring.

12. The valve apparatus according to claim 11, wherein the first and second retainer rings are each positioned outside of the flow path.

13. The valve apparatus according to claim 10, further comprising a biasing member between the armature and the bobbin that biases the armature and the valve member of the movable poppet into engagement with the valve seat.

14. The valve apparatus according to claim 10, wherein the movable poppet includes a hollow cylindrical body having a first end attached to the armature and an opposite second end attached to the fastener, and wherein the valve member extends radially outward from the hollow cylindrical body and portions of the hollow cylindrical body on opposing sides of the valve member are entirely spaced apart from an interior surface of the valve cartridge.

15. The valve apparatus according to claim 14, wherein the fastener includes a shank threadingly engaged with the second end of the hollow cylindrical body, and a head attached to the shank, and wherein an interface between the head and the second retainer ring defines one of the bearing surfaces of the movable poppet.

16. The valve apparatus according to claim 10, wherein the valve member includes an elastomeric coating on a surface that contacts the valve seat.
